**Europäisches Patentamt**

**European Patent Office**

**Office européen des brevets**

(19)

(11) Numéro de publication: **0 048 208**

**A1**

(12)

# DEMANDE DE BREVET EUROPEEN

(21) Numéro de dépôt: **81401429.6**

(22) Date de dépôt: **14.09.81**

(51) Int. Cl.³: **G 09 F 11/10**
**G 06 M 1/276, G 01 D 5/245**
**//G01P13/02**

(30) Priorité: **15.09.80 FR 8019865**

(43) Date de publication de la demande:
**24.03.82 Bulletin 82/12**

(84) Etats contractants désignés:
**AT BE CH DE GB IT LI LU NL SE**

(71) Demandeur: **ETABLISSEMENTS RUSSENBERGER**
**Avenue Jean-Jaurès**
**F-76530 Grand-Couronne(FR)**

(72) Inventeur: **Lavaure, Louis François**
**16, rue Edouard Herriot**
**F-76120 Grand Quevilly(FR)**

(74) Mandataire: **Phélip, Bruno et al,**
**c/o Cabinet Harlé & Phélip 21, rue de La Rochefoucauld**
**F-75009 Paris(FR)**

(54) Générateur d'impulsions électriques notamment pour afficheur numérique.

(57) Le générateur d'impulsions électriques comprend un dispositif de commande (1) prévu dans un boîtier (12) et capable de tourner dans le sens des aiguilles d'une montre et en sens inverse, une pièce (4) montée à pivotement sur une partie (3) du dispositif (1) et pourvue de contacts électriques (5,6) et d'un frotteur (F), lesquels contacts électriques (5,6), selon le mode de rotation du dispositif de commande (1), frottent sélectivement sur un disque (8) portant un ensemble (7) de parties conductrices de façon à envoyer, en fonction du sens de rotation du dispositif de commande (1), des impulsions électriques dans des directions différentes.
Application au réglage des afficheurs numériques.

FIG.1

EP 0 048 208 A1

### Générateur d'impulsions électriques notamment pour afficheur numérique

La présente invention concerne le domaine des générateurs d'impulsions électriques. Elle a pour objet un appareil de ce type, notamment pour afficheur numérique.

Les générateurs d'impulsions électriques selon l'art antérieur sont bien connus des spécialistes et il est superflu de décrire tant les moyens constitutifs que le fonctionnement de tels dispositifs.

Cependant, il convient d'observer que l'on connaît deux types principaux de générateurs d'impulsions électriques à savoir: d'une part les générateurs dont l'axe de commande tourne toujours dans le même sens et d'autre part les générateurs dont l'axe de commande tourne dans les deux sens.

La présente invention apporte une simplification considérable par rapport aux réalisations selon la technique antérieure en ce qui concerne à la fois l'agencement proprement dit des éléments constitutifs et la mise en oeuvre de ceux-ci; elle procure aussi un prix de revient extrêmement faible pour ledit générateur.

La présente invention concerne un générateur d'impulsions électriques, notamment pour afficheur numérique, qui comprend un dispositif de commande capable de tourner dans le sens des aiguilles d'une montre et en sens inverse, et une pièce pourvue de contacts électriques et capable de passer d'une position à une autre sous l'effet d'un changement du sens de rotation du dispositif de commande, de façon à envoyer, grâce auxdits contacts, en fonction du sens de rotation du dispositif de commande, des impulsions électriques dans des directions différentes, cette pièce étant portée par le dispositif de commande et montée à pivotement sur lui, de façon que, lorsqu'elle est entraînée en rotation par le dispositif de commande dans un sens ou un autre,les contacts électriques suivent des pistes circulaires qui diffèrent selon la position de la pièce et dont une au moins est électriquement discontinue.

Les caractéristiques ci-après,prises individuellement ou en combinaison,illustrent à titre non limitatif la présente invention:

- le dispositif de commande comporte un levier sur lequel la pièce est montée à pivotement autour d'un axe parallèle à l'axe de rotation du dispositif de commande,et les pistes circulaires parcourues par des contacts électriques sont portées par un disque situé dans un plan perpendiculaire à l'axe de rotation du dispositif de commande et sont concentriques à cet axe.

-lors de la rotation du dispositif de commande dans l'un ou l'autre sens,la pièce pourvue à ses extrémités de contacts électriques pivote sous l'effet du frottement d'un frotteur sur une partie du boîtier portant le dispositif de commande et est limitée dans sa rotation par l'un ou l'autre de deux ergots que présente le levier du dispositif de commande;

-le disque comprend trois pistes rondes conductrices dont deux comportent des créneaux tandis que la troisième piste est continue.

D'autres avantages et caractéristiques de l'invention ressortiront de la description détaillée ci-après faite en regard des dessins annexés sur lesquels:

Fig.1 est une vue en plan avec demi-coupe du générateur d'impulsions électriques selon la présente invention;

Fig.2 est une vue en élévation, partiellement en coupe du générateur d'impulsions électriques de l'invention;

Fig.3 est une vue en perspective éclatée du générateur d'impulsions électriques de l'invention où l'on a omis de représenter le boîtier pour plus de clarté.

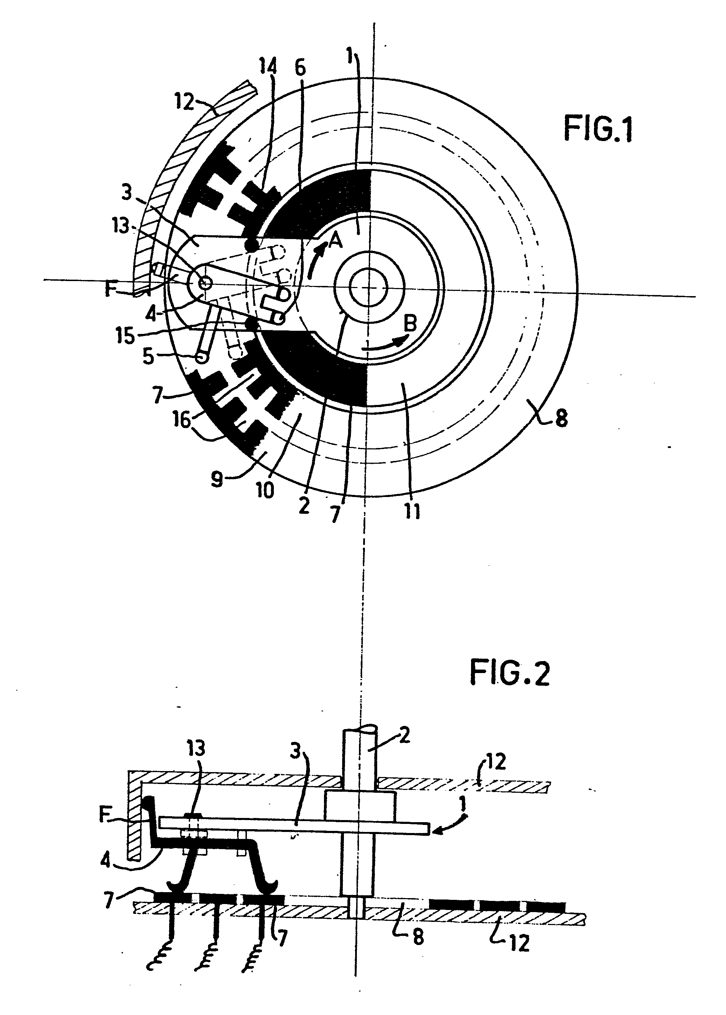

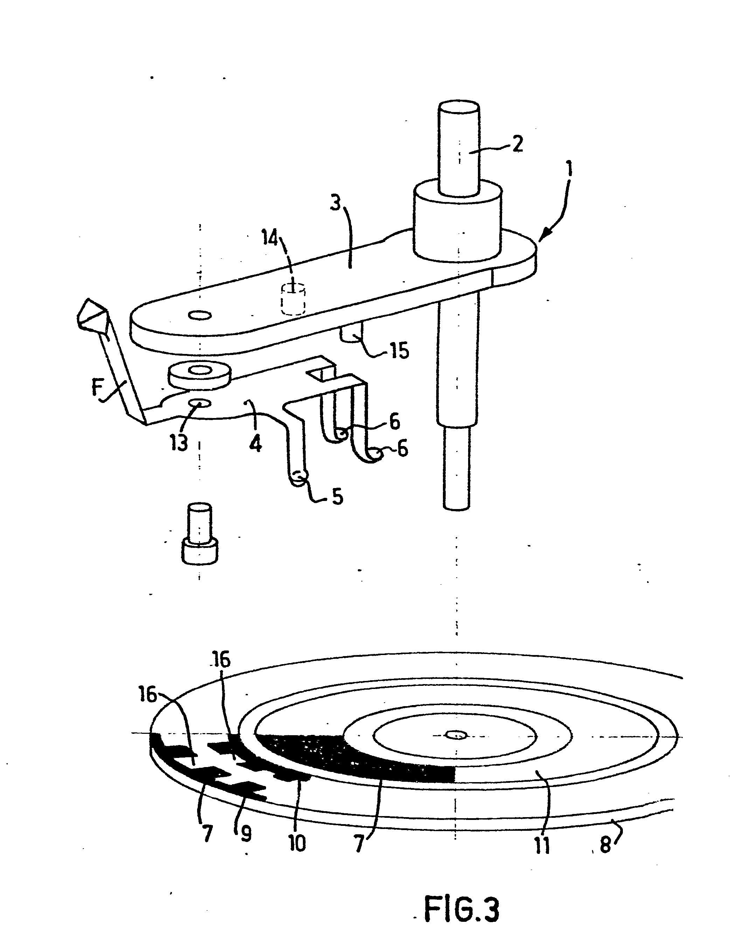

Sur les figures 1 à 3 des dessins annexés, le générateur d'impulsions électriques comprend un dispositif de commande 1 en une pièce, avec un axe 2 et un levier 3. Sur ce dernier est montée à pivotement en 13 une pièce 4 pourvue à ses extrémités de contacts électriques 5,6 et d'un frotteur F. Lors de la rotation de l'axe 2, les contacts électriques 5,6 frottent sélectivement sur un ensemble 7 de parties conductrices d'un disque 8 muni de pistes 9, 10,11 et supporté dans un boîtier 12.

La pièce 4 pivote sous l'effet du frottement du frotteur F sur le boîtier 12 et tourne autour de l'axe 13 . Elle est limitée dans sa rotation par l'un ou l'autre de deux ergots 14,15 que présente le levier 3 du dispositif de commande 1.

Le disque 8 comprend trois pistes rondes conductrices 9, 10,11. Les deux pistes conductrices 9,10 présentent des créneaux 16 tandis que la piste 11 est continue.

Le mode de fonctionnement du générateur d'impulsions électriques de l'invention illustré sur les figures 1 à 3 est le suivant:

Lorsque l'on tourne le dispositif de commande 1, par son axe 2, dans le sens des aiguilles d'une montre (flèche A sur la figure 1), on entraîne la pièce 4 solidaire du levier 3 dont les contacts électriques frottent sur le disque 8 et le frotteur F sur le boîtier 12.

L'effort de frottement entre le frotteur F et le boîtier 12 fait pivoter la pièce 4 qui se trouve alors dans la position représentée en trait pointillé sur la figure 1 et est en butée sur l'ergot 14. Le courant électrique peut alors passer entre les parties conductrices 11 et 10;il résulte de cette rotation des impulsions électriques correspondant à la forme de la partie conductrice 10. La fréquence de ces impulsions est, bien entendu,proportionnelle à la vitesse de rotation du dispositif de commande 1, notamment de l'axe 2.

Lorsqu'on tourne le dispositif de commande 1 dans le sens inverse à celui des aiguilles d'une montre (flèche B sur la figure 1),la pièce 4 entre le frotteur F et le boîtier 12 sous l'effet des efforts de frottement de sens contraire pivote en 13 pour venir en butée sur l'ergot 15. Cette position est représentée en trait plein sur la figure 1. Il en résulte un contact entre les pistes 11 et 9 du disque 8,ce qui permet d'envoyer ainsi par l'intermédiaire de la partie conductrice 9 des impulsions électriques vers une autre direction.

Ainsi,en fonction du sens de rotation du disque 8 il est possible d'envoyer des impulsions électriques de sens différents.

Ces deux directions différentes permettent en particulier d'incrémenter ou de décrémenter un afficheur numérique.

Il convient d'observer que la pièce 4 qui est limitée dans sa rotation par les butées 14, 15 et qui est solidaire du levier 3,peut être une pièce métallique.

Les pistes 9,10,11 du disque 8 sont des pistes à circuit imprimé.

Le boîtier 12 est réalisé en toute matière synthétique convenable.

Le mode de réalisation,décrit et représenté à titre d'exemple,comprend un frotteur F dont l'action permet de faire pivoter la pièce 4. On notera cependant que la présence de ce frotteur F,quoique avantageuse,n'est pas indispensable,car on peut obtenir l'entraînement de la pièce 4 en donnant des dimensions différentes aux bras de leviers respectivement entre le point de rotation 13 de la pièce 4 et l'axe 2,et entre le point 13 et le contact électrique 5.

La présente invention fournit donc un générateur d'impulsions électriques d'une conception très simple,d'un faible prix de revient et qui convient bien à l'utilisation envisagée.

L'invention n'est pas limitée au mode de réalisation représenté et décrit en détails et diverses modifications peuvent y être apportées sans sortir de son cadre.

## REVENDICATIONS

1. Générateur d'impulsions électriques, destiné notamment à régler un afficheur numérique comprenant un dispositif de commande (1) capable de tourner dans le sens des aiguilles d'une montre et en sens inverse,et une pièce (4)pourvue de contacts électriques (5,6)et capable de passer d'une position à une autre sous l'effet d'un changement du sens de rotation du dispositif de commande,de façon à envoyer, grâce auxdits contacts,en fonction du sens de rotation du dispositif de commande (1),des impulsions électriques dans des directions différentes,caractérisé en ce que ladite pièce (4) est portée par le dispositif de commande et montée à pivotement sur lui,et en ce que,lorsqu'elle est entraînée en rotation par le dispositif de commande dans un sens ou un autre, les contacts électriques (5,6) suivent des pistes circulaires qui diffèrent selon la position de la pièce (4) et dont une au moins est électriquement discontinue.

2. Générateur d'impulsions électriques selon la revendication 1,caractérisé en ce que le dispositif de commande comporte un levier (3)sur lequel la pièce (4) est montée à pivotement autour d'un axe parallèle à l'axe de rotation du dispositif de commande,et en ce que les pistes circulaires parcourues par les contacts électriques sont portées par un disque situé dans un plan perpendiculaire à l'axe de rotation du dispositif de commande et sont concentriques à cet axe.

3.Générateur d'impulsions électriques selon l'une des revendications 1 ou 2,caractérisé en ce que lors de la rotation du dispositif de commande (1) dans l'un ou l'autre sens,la pièce (4)pourvue à ses extrémités de contacts électriques (5,6)pivote sous l'effet du frottement d'un frotteur F sur une partie du boîtier (12)portant le dispositif de commande et est limitée dans sa rotation par l'un ou l'autre de deux ergots (14,15)du levier (3)du dispositif de commande (1).

4.Générateur d'impulsions électriques selon l'une quelconque des revendications 1 à 3, caractérisé en ce que le disque (8)comprend trois pistes rondes conductrices (9,10,11)dont deux (9,10)comportent des créneaux (16)tandis que la troisième piste (11)est continue.

1/2

FIG.1

FIG.2

FIG.3

**0048208**
Numero de la demande

Office européen
des brevets

**RAPPORT DE RECHERCHE EUROPEENNE**

EP 81 40 1429

## DOCUMENTS CONSIDERES COMME PERTINENTS

| Catégorie | Citation du document avec indication, en cas de besoin, des parties pertinentes | Revendication concernée |
|---|---|---|
| A | GB - A - 3 878 A.D. 1912 (PETER RONALD KEPPIE)  <br> * Revendications 1-2,6; page 7, lignes 20-40; figures 4-4A * | 1 |
| | -- | |
| A | DE - C - 140 738 (HAMMACHER & PAETZOLD)  <br> * Revendication; page 2, lignes 27-77; figures 1-3 * | 1 |
| | ---- | |

**CLASSEMENT DE LA DEMANDE (Int. Cl.³)**

G 09 F 11/10
G 06 M 1/276
G 01 D 5/245//
G 01 P 13/02

**DOMAINES TECHNIQUES RECHERCHES (Int. Cl.³)**

G 09 F 11/00
G 01 D 5/24
      5/25
G 06 M 1/10
      1/27
      3/06
H 01 H 25/06
      35/12
G 01 P 13/02
      3/48

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cite pour d'autres raisons
&: membre de la même famille, document correspondant

Le present rapport de recherche a été établi pour toutes les revendications

| Lieu de la recherche | Date d'achèvement de la recherche | Examinateur |
|---|---|---|
| La Haye | 08-12-1981 | FRANSEN |

OEB Form 1503.1  06.78